(19) Europäisches Patentamt
European Patent Office
Office européen des brevets

(11) **EP 4 354 529 A1**

(12) **EUROPEAN PATENT APPLICATION**
published in accordance with Art. 153(4) EPC

(43) Date of publication:
**17.04.2024 Bulletin 2024/16**

(21) Application number: **22816054.5**

(22) Date of filing: **30.05.2022**

(51) International Patent Classification (IPC):
***H01M 4/13*** (2010.01)   ***H01M 4/62*** (2006.01)

(52) Cooperative Patent Classification (CPC):
**H01M 4/13; H01M 4/62;** Y02E 60/10

(86) International application number:
**PCT/JP2022/021946**

(87) International publication number:
**WO 2022/255307 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2021 JP 2021091978**

(71) Applicant: **Teijin Limited
Osaka 530-0005 (JP)**

(72) Inventors:
• **YACHI, Kazuki
Osaka-shi, Osaka 530-0005 (JP)**
• **DAIDO, Takahiro
Osaka-shi, Osaka 530-0005 (JP)**

(74) Representative: **Carpmaels & Ransford LLP
One Southampton Row
London WC1B 5HA (GB)**

(54) **ELECTRODE SHEET FOR LITHIUM ION SECONDARY BATTERY**

(57)   The present invention provides an electrode sheet for a lithium ion secondary battery containing at least a lithium ion battery active material, fibrous carbon, and a fluorine-based polymer. This electrode sheet for a lithium ion secondary battery is characterized by having the film thickness of 50-2000 (um), the tensile breaking strength of at least 0.2 (N/mm$^2$), the average fiber diameter of the fibrous carbon of 100-900 (nm), and the fibrous carbon content of 0.1-10 (mass%) in the electrode sheet.

EP 4 354 529 A1

## Description

### Technical Field

The present invention relates to an electrode sheet for lithium ion secondary batteries that includes at least an active material for lithium ion batteries, fibrous carbon, and a fluorine-based polymer.

### Background Art

Lithium ion secondary batteries are a secondary battery in which lithium ions in an electrolyte serve for electrical conduction, and mainly used batteries include a positive electrode using a lithium metal oxide as an electrode active material, and include a negative electrode using a carbon material such as graphite as an electrode active material. Lithium ion secondary batteries have a characteristic of high energy density among secondary batteries, and therefore have been applied to a range extending from small devices such as mobile phones to large devices such as electric vehicles.

An electrode sheet for lithium ion secondary batteries is generally produced by preparing a slurry containing an active material for lithium ion batteries, a conductive aid, a binder, and a solvent, applying this slurry into a thin film, and then removing the solvent. Therefore, a slurry preparation step of dispersing an active material for lithium ion batteries, a conductive aid, a binder, and a solvent uniformly, and a drying step at the time of removing the solvent are necessary, and thus the manufacturing process is complicated. Furthermore, the thickness of the electrode sheet is difficult to increase because the electrode sheet is likely to crack in the drying process at the time of removing the solvent. For the purpose of improving conductivity, fibrous carbon may be used as a conductive aid, but in the process of applying the slurry into a thin film, fibrous carbon having a large aspect ratio tends to be oriented in the application direction. As a result, the electrode sheet is likely to have anisotropy in the mechanical strength.

Patent Literature 1 describes that a positive electrode was produced by producing a slurry using lithium cobalt oxide as a positive electrode active material, polyvinylidene fluoride as a binder, acetylene black as a conductive material, and N-methylpyrrolidone as a solvent, and applying, drying, and roll-pressing this slurry. Patent Literature 2 and Patent Literature 3 disclose a dry film produced by fibrillating polytetrafluoroethylene using a rolling apparatus, but do not describe use of fibrous carbon.

### Citation List

### Patent Literature

    Patent Literature 1: WO 2014/115852 A
    Patent Literature 2: JP 2020-522090 A
    Patent Literature 3: JP 2021-504877 A

### Summary of Invention

### Technical Problem

An object of the present invention is to provide an electrode sheet for lithium ion secondary batteries, that can be produced without using a solvent, and a method for manufacturing the electrode sheet for lithium ion secondary batteries.

### Solution to Problem

As a result of intensive studies in view of the above-described conventional techniques, the present inventors have found that the above-described problems can be solved by using predetermined fibrous carbon and a fluorine-based polymer as a binder in an electrode sheet, and have completed the present invention.

That is, the electrode sheet of the present invention is an electrode sheet supported by a fluorine-based polymer, and is characterized in that no solvent is used for film formation in a manufacturing process of the electrode sheet.

The present invention to solve the above-described problems is as described below.

[1] An electrode sheet for lithium ion secondary batteries, the electrode sheet including at least an active material for lithium ion batteries, fibrous carbon, and a fluorine-based polymer,

the electrode sheet for lithium ion secondary batteries having a thickness of 50 to 2000 (um) and a tensile breaking strength of 0.20 (N/mm$^2$) or more,
the fibrous carbon having an average fiber diameter of 100 to 900 (nm), wherein
a content of the fibrous carbon in the electrode sheet for lithium ion secondary batteries is 0.1 to 10 (mass%).

The invention described in [1] above is an electrode sheet for lithium ion secondary batteries in which the sheet form is maintained by a fluorine-based polymer. This electrode sheet is manufactured without undergoing a state of slurry and called a dry film.

[2] The electrode sheet for lithium ion secondary batteries according to [1], further including a carbon-based conductive aid other than the fibrous carbon.

The invention described in [2] above further includes a carbon-based conductive aid other than the fibrous carbon. The carbon-based conductive aid mentioned here does not mean fibrous carbon that differs from the fibrous carbon specified in [1] only in average fiber diameter.

[3] The electrode sheet for lithium ion secondary batteries according to [1], wherein the fibrous carbon has an average fiber length of 10 to 50 ($\mu$m).

[4] The electrode sheet for lithium ion secondary batteries according to [1], wherein the fibrous carbon packed at a packing density of 0.8 (g/cm$^3$) has a powder volume resistivity of $4.00 \times 10^{-2}$ ($\Omega \cdot$cm) or less.

[5] The electrode sheet for lithium ion secondary batteries according to [1], wherein the fluorine-based polymer is polytetrafluoroethylene.

[6] The electrode sheet for lithium ion secondary batteries according to [1], having a porosity of 5 to 60 (vol%).

[7] The electrode sheet for lithium ion secondary batteries according to [1], having a product of the tensile breaking strength (N/mm$^2$) and the thickness (mm) of 0.04 (N/mm) or more.

[8] The electrode sheet for lithium ion secondary batteries according to [1], having an electrical conductivity of $8.0 \times 10^{-4}$ (S/cm) or more in a thickness direction.

**Advantageous Effects of Invention**

The electrode sheet for lithium ion secondary batteries of the present invention is easy to manufacture because a solvent for film formation is not used in the manufacturing process.

**Brief Description of Drawings**

Fig. 1 is a SEM photograph (magnification: 5000) showing a surface of an electrode sheet obtained in Example 1.
Fig. 2 is a SEM photograph (magnification: 5000) showing a cross section of the electrode sheet obtained in Example 1.
Fig. 3 is a SEM photograph (magnification: 5000) showing a surface of an electrode sheet obtained in Example 2.
Fig. 4 is a SEM photograph (magnification: 5000) showing a cross section of the electrode sheet obtained in Example 2.
Fig. 5 is a SEM photograph (magnification: 5000) showing a surface of an electrode sheet obtained in Comparative Example 1.
Fig. 6 is a SEM photograph (magnification: 5000) showing a cross section of the electrode sheet obtained in Comparative Example 1.
Fig. 7 is a SEM photograph (magnification: 5000) showing a surface of an electrode sheet obtained in Comparative Example 2.

**Description of Embodiments**

(1) Electrode Sheet for Lithium Ion Secondary Batteries

The electrode sheet for lithium ion secondary batteries of the present invention (hereinafter, sometimes abbreviated as "electrode sheet") includes at least an active material for lithium ion batteries, fibrous carbon, and a fluorine-based polymer. In the electrode sheet of the present invention, the fluorine-based polymer is preferably dispersed in the electrode sheet while including a fibrous form. Specifically, it is preferable that the fluorine-based polymer be partially or wholly fibrillated and the fibrillated fluorine-based polymer be dispersed so as to maintain the form of the electrode sheet in cooperation with the fibrous carbon. In particular, it is more preferable that the electrode sheet be configured so that the fibrillated fluorine-based polymer is entangled with the fibrous carbon to support the fibrous carbon and the fibrous carbon forms pores. By configuring the electrode sheet as described above, a configuration can be obtained in which the volume variation of the active material in the electrode sheet can be allowed while the form stability of the whole electrode sheet is maintained by the fibrous carbon having a predetermined fiber length.

The electrode sheet has a thickness of 50 to 2000 um. The electrode sheet preferably has a thickness of 80 um or more, and in the electrode sheet, a thickness of 100 um or more, 120 um or more, 150 um or more, 180 um or more, 200 um or more, 250 um or more, and 300 um or more become more preferable in this order. If the thickness is less than 50 um, the sheet shape is difficult to maintain. Furthermore, in a case where a high-capacity cell is to be manufactured, separators and current collectors are used in large amounts, and as a result, the volume occupancy of the electrode sheet in the cell decreases. Such a state is not preferable from the viewpoint of energy density, and the use is significantly limited. Use in a power source requiring a high energy density is particularly difficult.

The electrode sheet has a thickness of 2000 um or less from the viewpoint of manufacturing the electrode sheet stably. The electrode sheet preferably has a thickness of 1500 um or less, and in the electrode sheet, a thickness of 1200 um or less, 1000 um or less, 800 um or less, 600 um or less, 500 um or less, and 400 um or less become more preferable in this order.

The electrode sheet preferably has a tensile breaking strength of 0.20 N/mm$^2$ or more. The tensile breaking strength is more preferably 0.25 N/mm$^2$ or more, and a tensile breaking strength of 0.30 N/mm$^2$ or more, 0.40 N/mm$^2$ or more, 0.50 N/mm$^2$ or more, 0.60 N/mm$^2$ or more, and 0.65 N/mm$^2$ or more become more preferable in this order. If the tensile breaking strength is less than 0.20 N/mm$^2$, the handleability of the battery is likely to deteriorate. Furthermore, the battery performance is likely to deteriorate due to a volume change of the active material accompanying with charge and discharge of the lithium ion secondary battery.

The upper limit of the tensile breaking strength of the electrode sheet is not particularly limited, and is generally 10.0 N/mm$^2$ or less. The tensile breaking strength is preferably 5.0 N/mm$^2$ or less, and a tensile breaking strength of 3.0 N/mm$^2$ or less, 2.0 N/mm$^2$ or less, 1.5 N/mm$^2$ or less, and 1.0 N/mm$^2$ or less become more preferable in this order.

The product of the tensile breaking strength (N/mm$^2$) and the thickness (mm) of the electrode sheet is preferably 0.04 (N/mm) or more, and a product of 0.05 (N/mm) or more, 0.06 (N/mm) or more, 0.08 (N/mm) or more, 0.1 (N/mm) or more, 0.15 (N/mm) or more, and 0.2 (N/mm) or more become more preferable in this order. If the product is less than 0.04 (N/mm), the sheet shape is difficult to maintain.

The upper limit of the product of the tensile breaking strength (N/mm$^2$) and the thickness (mm) of the electrode sheet is not particularly limited, and is generally 5.0 (N/mm) or less, and a product of 3.0 (N/mm) or less, 2.0 (N/mm) or less, 1.5 (N/mm) or less, 1.0 (N/mm) or less, 0.8 (N/mm) or less, 0.6 (N/mm) or less, 0.5 (N/mm) or less, and 0.4 (N/mm) or less become more preferable in this order. If the product is more than 5.0 (N/mm), the blending ratio of the fluorine-based polymer used as a binder increases, and the blending ratio of the active material relatively decreases, so that battery performance is likely to deteriorate.

The electrode sheet preferably has an electrical conductivity of $8.0 \times 10^{-4}$ S/cm or more in the thickness direction. The electrical conductivity is preferably $1.0 \times 10^{-3}$ S/cm or more, and an electrical conductivity of $1.5 \times 10^{-3}$ S/cm or more, $3.0 \times 10^{-3}$ S/cm or more, $5.0 \times 10^{-3}$ S/cm or more, $7.0 \times 10^{-3}$ S/cm or more, $9.0 \times 10^{-3}$ S/cm or more, and $1.0 \times 10^{-2}$ S/cm or more become more preferable in this order. Such an electrical conductivity can be achieved if predetermined fibrous carbon is included as a conductive aid.

$\sigma/Xc$ obtained by dividing the electrical conductivity of the electrode sheet in the thickness direction, $\sigma$ (S/cm), by the content of the carbon-based conductive aid, Xc (mass%), is preferably $1.0 \times 10^{-4}$ or more.

$\sigma/Xc$ is more preferably $1.5 \times 10^{-4}$ or more, and a value of $\sigma/Xc$ of $2.0 \times 10^{-4}$ or more, $3.0 \times 10^{-4}$ or more, $4.0 \times 10^{-4}$ or more, and $5.0 \times 10^{-4}$ or more become more preferable in this order. If $\sigma/Xc$ is less than $1.0 \times 10^{-4}$, the content of the carbon-based conductive aid needs to be excessive, and such a content is not preferable from the viewpoint of improving the energy density. The upper limit of $\sigma/Xc$ is not particularly limited, and is generally $1.0 \times 10^{-2}$ or less.

The electrode sheet preferably has an apparent density of 1.0 to 3.0 g/cm$^3$. The apparent density is more preferably 1.2 g/cm$^3$ or more, and an apparent density of 1.5 g/cm$^3$ or more, 1.8 g/cm$^3$ or more, and 2.0 g/cm$^3$ or more become more preferable in this order. The electrode sheet more preferably has an apparent density of 2.8 g/cm$^3$ or less, and in the electrode sheet, an apparent density of 2.5 g/cm$^3$ or less and 2.2 g/cm$^3$ or less become more preferable in this order. By setting the apparent density of the electrode sheet within this range, a crack in the electrode sheet is particularly suppressed even when a charge-discharge cycle is repeated that is accompanied by a volume change of the active material. The electrode sheet preferably has a true density of 2.0 to 4.0 g/cm$^3$, and more preferably 3.0 to 3.7 g/cm$^3$. The apparent density of the electrode sheet means a density calculated with Formula (2) described below.

The electrode sheet has pores. The porosity is preferably 5.0 vol% or more and 60 vol% or less. If the porosity is within this range, a crack in the electrode sheet is particularly suppressed even when a charge-discharge cycle is repeated that is accompanied by a volume change of the active material. By using the electrode sheet having such pores, a high-power lithium ion secondary battery can be configured in which the electron conductivity and the ion conductivity are particularly high. The porosity is preferably 10 vol% or more, and a porosity of 15 vol% or more, 20 vol% or more, 25 vol% or more, 30 vol% or more, and 35 vol% or more become more particularly preferable in this order. The upper limit of the porosity is preferably 55 vol% or less, more preferably 50 vol% or less, and particularly preferably 45 vol% or less.

The porosity of the electrode sheet can be adjusted by controlling the material, the size, and the content of the fibrous carbon, the fluorine-based polymer, and the active material, and by controlling a molding condition at the time of producing the electrode sheet.

The method of calculating the porosity is not particularly limited, and examples of the method include a method of calculating the porosity from the apparent density and the true density of the electrode sheet in accordance with Formula (1) described below and a method of calculating the porosity from a three-dimensional image obtained by tomography such as X-ray CT.

$$\text{Porosity (vol\%)} = \text{(true density} - \text{apparent density)/true}$$
$$\text{density} \times 100 \quad \cdots \text{ Formula (1)}$$

In the case of calculating the porosity in accordance with Formula (1), the true density and the apparent density are measured. Examples of the method of measuring the true density include a method of calculating the true density based on the true density and the mass ratio of each material included in the electrode sheet, and a method of measuring the true density using a gas phase substitution method (pycnometer method) or a liquid phase method (Archimedes method) after pulverizing the electrode sheet. The apparent density of the electrode sheet can be calculated, for example, from the mass and the volume of the electrode sheet with Formula (2) described below.

$$\text{Apparent density of electrode sheet} = \text{mass of electrode}$$
$$\text{sheet/(thickness of electrode sheet} \times \text{area)} \quad \cdots \text{ Formula (2)}$$

(1-2) Active Material

The electrode sheet of the present invention includes at least a positive electrode active material or a negative electrode active material.

<Positive Electrode Active Material>

As the positive electrode active material included in the electrode sheet of the present invention, any one or more can be appropriately selected from lithium-containing metal oxides capable of occluding and releasing lithium ions in a lithium ion secondary battery, and can be used. Examples of the lithium-containing metal oxides include composite oxides containing lithium and at least one element selected from the group consisting of Co, Mg, Mn, Ni, Fe, Al, Mo, V, W, Ti, and the like.

Specific examples of the lithium-containing metal oxides include at least one selected from the group consisting of $Li_xCoO_2$, $Li_xNiO_2$, $Li_xMnO_2$, $Li_xCo_aNi_{1-a}O_2$, $Li_xCO_bV_{1-b}O_z$, $Li_xCO_bFe_{1-b}O_2$, $Li_xMn_2O_4$, $Li_xMn_cCo_{2-c}O_4$, $Li_xMn_cNi_{2-c}O_4$, $Li_xMn_cV_{2-c}O_4$, $Li_xMn_cFe_{2-c}O_4$ (here, x = 0.02 to 1.2, a = 0.1 to 0.9, b = 0.8 to 0.98, c = 1.2 to 1.96, and z = 2.01 to 2.3), $LiFePO_4$, and the like. Preferred examples of the lithium-containing metal oxides include at least one selected from the group consisting of $Li_xCoO_2$, $Li_xNiO_2$, $Li_xMnO_2$, $Li_xCo_aNi_{1-a}O_2$, $Li_xMn_2O_4$, $Li_xCo_bV_{1-b}O_z$ (here, x, a, b, and z are the same as described above), and $LiFePO_4$. The value of x is a value before starting charge and discharge, and increases or decreases due to charge and discharge.

The positive electrode active materials may be used singly or in combination of two or more kinds thereof. The positive electrode active material preferably has an average particle size of 10 um or less, more preferably 0.05 to 7 um, and still more preferably 1 to 7 um. If the average particle size is more than 10 um, the efficiency of charge-discharge reaction under a large current may deteriorate.

The content of the positive electrode active material in the electrode mixture layer of the present invention is preferably 60 mass% or more, more preferably 70 to 98.5 mass%, and still more preferably 75 to 98.5 mass%. If the content is less than 60 mass%, use in a power source requiring a high energy density may be difficult. If the content is more than 98.5 mass%, a crack may be generated in the electrode mixture layer or the electrode mixture layer may be peeled off from the current collector due to too small an amount of the fluorine-based polymer. Furthermore, the conductivity of the electrode mixture layer may be insufficient due to too small contents of the fibrous carbon and the carbon-based conductive aid.

<Negative Electrode Active Material>

As the negative electrode active material included in the electrode sheet of the present invention, any one or more can be appropriately selected from materials conventionally known as a negative electrode active material in a lithium ion secondary battery, and can be used. For example, as a material capable of occluding and releasing lithium ions, a carbon material, Si, Sn, or an alloy or oxide containing at least one thereof can be used. Among them, a carbon material is preferable from the viewpoint of cost and the like. Examples of the carbon material include natural graphite, artificial graphite manufactured by heat-treating petroleum-based or coal-based coke, hard carbon obtained by carbonizing a resin, and mesophase pitch-based carbon materials.

In the case of using natural graphite or artificial graphite, the plane spacing d(002) of the (002) plane of the graphite structure measured by powder X-ray diffraction is preferably in the range of 0.335 to 0.337 nm from the viewpoint of increasing the battery capacity. The natural graphite refers to graphite materials naturally produced as an ore. Natural graphite is classified into two kinds, scaly graphite having a high degree of crystallinity and earthy graphite having a low degree of crystallinity, according to the appearance and the properties. The scaly graphite is further classified into flake graphite having a leaf-like appearance and scaly graphite having a massive appearance. The natural graphite to be used as a graphite material is not particularly limited in terms of the production area, the properties, and the kind. Furthermore, natural graphite or particles manufactured from natural graphite as a raw material may be heat-treated and used.

Artificial graphite refers to graphite produced with a wide range of artificial methods and graphite materials close to a perfect crystal of graphite. Typical examples of them include artificial graphite obtained through a firing step at about 500 to 1000°C and a graphitizing step at 2000°C or more using, as a raw material, tar or coke obtained from, for example, a residue in dry distillation of coal or distillation of crude oil. Kish graphite obtained by reprecipitating carbon from molten iron is also a kind of artificial graphite.

Use of an alloy containing at least one of Si or Sn in addition to a carbon material as the negative electrode active material is effective in that the electric capacity can be lower than in the case of using Si or Sn singly or using an oxide of Si or Sn. Among such alloys, a Si-based alloy is preferable. Examples of the Si-based alloy include alloys of Si and at least one element selected from the group consisting of B, Mg, Ca, Ti, Fe, Co, Mo, Cr, V, W, Ni, Mn, Zn, Cu, and the like. Specific examples of the Si-based alloy include at least one selected from the group consisting of $SiB_4$, $SiB_6$, $Mg_2Si$, $Ni_2Si$, $TiSi_2$, $MoSi_2$, $CoSi_2$, $NiSi_2$, $CaSi_2$, $CrSi_2$, $Cu_5Si$, $FeSi_2$, $MnSi_2$, $VSi_2$, $WSi_2$, $ZnSi_2$, and the like.

As the negative electrode active material in the electrode sheet of the present invention, the above-described materials may be used singly or in combination of two or more kinds thereof. The negative electrode active material has an average particle size of 10 um or less. If the average particle size is more than 10 um, the efficiency of charge-discharge reaction under a large current deteriorates. The average particle size is preferably 0.1 to 10 um, and more preferably 1 to 7 $\mu$m.

The content of the negative electrode active material in the electrode sheet is not particularly limited, and is preferably 30 to 99 mass%, more preferably 40 to 99 mass%, and still more preferably 50 to 95 mass%. If the content is less than 30 mass%, use in a power source requiring a high energy density may be difficult.

(1-3) Fibrous Carbon

The fibrous carbon used in the present invention is preferably a carbon fiber, and is more preferably a pitch-based carbon fiber using pitch as a starting material from the viewpoint of excellent conductivity.

The fibrous carbon has an average fiber diameter of 100 to 900 nm. The lower limit of the average fiber diameter is preferably 200 nm or more, more preferably more than 200 nm, still more preferably 220 nm or more, and still even more preferably 250 nm or more. The upper limit of the average fiber diameter is preferably 700 nm or less, more preferably 600 nm or less, more preferably 500 nm or less, more preferably 400 nm or less, and more preferably 350 nm or less. If the average fiber diameter is less than 100 nm, the fiber is likely to break, and less likely to function as a conductive material. Furthermore, fibrous carbon having an average fiber diameter of less than 100 nm has a large specific surface area, and covers the surface of the active material in the electrode sheet. As a result, the number of contact points in the active material decreases, leading to inhibition of formation of an ion conduction path. Fibrous carbon having an average fiber diameter of more than 900 nm is likely to have gaps between the fibers in the electrode sheet, and a high electrode sheet density may be difficult to obtain.

The fiber diameter distribution in the fibrous carbon having an average fiber diameter of 100 to 900 nm may have one peak or two or more peaks at 100 to 900 nm, and preferably has one peak usually.

The fibrous carbon has an aspect ratio (average fiber length/average fiber diameter) of 30 or more, preferably 35 or more, and preferably 40 or more. If the aspect ratio is less than 30, at the time of manufacturing the electrode sheet, formation of a conductive path by the fibrous carbon tends to be insufficient in the electrode sheet, and the resistance value of the electrode sheet may be insufficiently reduced in the thickness direction. Furthermore, the mechanical strength of the electrode sheet tends to be insufficient. The upper limit of the aspect ratio is not particularly limited, and is preferably 1000 or less, more preferably 500 or less, and still more preferably 300 or less. If the aspect ratio is too large, the fibrous carbon is entangled and may be insufficiently dispersed in the electrode sheet, and formation of a conductive path may be insufficient.

The carbon fibers used in the present invention preferably have an average fiber length of 10 um or more, more preferably 11 um or more, still more preferably 12 um or more, still even more preferably 13 um or more, and particularly preferably 15 um or more. The average fiber length is preferably 100 um or less, more preferably 80 um or less, and particularly preferably 50 um or less. If the fibrous carbon having such an average fiber length is present in the electrode sheet, pores are formed around the fibrous carbon, the volume variation of the active material is allowed, a conductive path can be maintained by following both an increase and a decrease in the volume of the active material, and the electrode sheet becomes tough, so that a decrease in the strength and a decrease in the apparent density can be suppressed. If the electrode sheet is manufactured using carbon fibers having an average fiber length of less than 10 um, formation of a conductive path tends to be insufficient in the electrode sheet, and the resistance value of the electrode sheet may be insufficiently reduced in the thickness direction. if the electrode sheet is manufactured using fibrous carbon having an average fiber length of more than 100 um, the fibrous carbon tends to be oriented in the in-plane direction in the electrode sheet. As a result, a conductive path may be difficult to form in the thickness direction.

The fibrous carbon used in the present invention preferably has a structure having substantially no branch. The phrase "having substantially no branch" means that the branching degree is 0.01 pieces/$\mu$m or less. The fibrous carbon in the present invention preferably has a branching degree of 0. Here, the term "branch" refers to a granular portion in which the fibrous carbon is bonded to another fibrous carbon at a place other than the terminal, and means that the main axis of the fibrous carbon is branched at the intermediate portion, and that the main axis of the fibrous carbon has a branched sub-axis. As the fibrous carbon having a branch, for example, vapor grown (vapor phase method) carbon fibers (such as VGCF (registered trademark) manufactured by Showadenkosya. co. ltd) are known that are manufactured with a gas phase method in which a hydrocarbon such as benzene is vaporized in a high temperature atmosphere in the presence of a metal such as iron as a catalyst. Fibrous carbon having a linear structure substantially without a branched structure has better dispersibility than fibrous carbon having a branch, and is likely to form a conductive path over a long distance. The cases referred to as a linear structure include a case where the fibrous carbon has a complete linear structure, a case where the fibrous carbon is slightly bent at one end or both ends, and a case where the fibrous carbon is slightly bent at a portion other than both ends.

Here, the branching degree of the fibrous carbon used in the present invention means a value measured from a photograph taken with a field emission scanning electron microscope at a magnification of 5000 times.

The fibrous carbon is to have a fibrous form as a whole, and examples of the fibrous carbon include fibrous carbon in which fibrous carbon having an aspect ratio less than the above-described preferable range is contact with or bonded to another such fibrous carbon to integrally form a fiber shape (such as fibrous carbon in which spherical carbon is connected in a beaded form, and fibrous carbon in which at least one or a plurality of extremely short fibers are connected by fusion or the like).

The fibrous carbon used in the present invention has high conductivity in a state of low packing density. Fibrous carbon having high conductivity in a state of low packing density can impart conductivity at a further low concentration of the fibrous carbon added.

Specifically, when the fibrous carbon is packed at a packing density of 0.8 g/cm$^3$, the powder volume resistivity is preferably $4.00 \times 10^{-2}$ $\Omega \cdot$cm or less, and more preferably $3.00 \times 10^{-2}$ $\Omega \cdot$cm or less. If the powder volume resistivity is more than $4.00 \times 10^{-2}$ $\Omega \cdot$cm, the amount of fibrous carbon to be added for improving conductivity increases, and therefore such a powder volume resistivity is not preferable. The lower limit is not particularly limited, and is generally about 0.0001 $\Omega \cdot$cm.

The fibrous carbon used in the present invention preferably has a distance between adjacent graphite sheets (d002) measured by wide-angle X-ray measurement of 0.3400 nm or more, more preferably more than 0.3400 nm, still more preferably 0.3410 nm or more, and still even more preferably 0.3420 nm or more. d002 is preferably 0.3450 nm or less, and more preferably 0.3445 nm or less. If d002 is 0.3400 nm or more, the fibrous carbon is less likely to be brittle. Therefore, the fiber is less likely to break at the time of processing such as crushing, and the fiber length is maintained. As a result, a conductive path over a long distance is easily formed. Furthermore, the conductive path is easily maintained by following a volume change of the active material accompanying with charge and discharge of the lithium ion secondary battery.

The fibrous carbon used in the present invention preferably has a crystallite size (Lc002) measured by wide-angle X-ray measurement of 50 nm or less, and in the fibrous carbon, a crystallite size of 40 nm or less, 30 nm or less, and 25 nm or less become more preferable in this order. The larger the crystallite size (Lc002) is, the higher the crystallinity is, and the more excellent the conductivity is. However, if the crystallite size (Lc002) is large, the fibrous carbon is less likely to be brittle. Therefore, the fiber is less likely to break at the time of processing such as crushing, and the fiber length is maintained. As a result, a conductive path over a long distance is easily formed. Furthermore, the conductive path is easily maintained by following a volume change of the active material accompanying with charge and discharge of the all-solid lithium secondary battery. The lower limit of the crystallite size (Lc002) is not particularly limited, and is preferably 1 nm or more.

In the present invention, the crystallite size (Lc002) refers to a value measured in accordance with Japanese Industrial Standards JIS R 7651 (2007 edition) "Measurement of lattice parameters and crystallite sizes of carbon materials".

The fibrous carbon used in the present invention preferably has a specific surface area of 1 $m^2$/g or more and 50 $m^2$/g or less. If the fibrous carbon has a specific surface area of less than 1 $m^2$/g, a contact point between the active material and the fibrous carbon as a conductive aid is difficult to ensure, and an electron conduction path may be insufficiently formed.

Meanwhile, too large a specific surface area may be a hindrance to an ion conduction path. That is, if the fibrous carbon has a specific surface area of more than 50 $m^2$/g, the fibrous carbon covers the surface of the active material, and the number of contact points between the solid electrolyte serving for ion conduction and the active material decreases, so that ion conduction may be inhibited. The lower limit of the specific surface area is preferably 2 $m^2$/g or more, more preferably 3 $m^2$/g or more, still more preferably 5 $m^2$/g or more, and particularly preferably 7 $m^2$/g or more. The upper limit of the specific surface area is preferably 40 $m^2$/g or less, more preferably 30 $m^2$/g or less, still more preferably 25 $m^2$/g or less, and particularly preferably 20 $m^2$/g or less.

The fibrous carbon used in the present invention preferably contains substantially no metal element. Specifically, the total content of metal elements is preferably 50 ppm or less, more preferably 30 ppm or less, and still more preferably 20 ppm or less. If the content of metal elements is more than 50 ppm, the battery is likely to deteriorate due to the catalytic action of the metals. In the present invention, the content of metal elements means the total content of Li, Na, Ti, Mn, Fe, Ni, and Co. In particular, the content of Fe is preferably 5 ppm or less, more preferably 3 ppm or less, and still more preferably 1 ppm or less. If the content of Fe is more than 5 ppm, the battery is particularly likely to deteriorate, and therefore such a content is not preferable.

In the fibrous carbon used in the present invention, the contents of hydrogen, nitrogen, and ash in the fiber are each preferably 0.5 mass% or less, and more preferably 0.3 mass% or less. If the contents of hydrogen, nitrogen, and ash in the fibrous carbon are each 0.5 mass% or less, a structural defect of the graphite layer is further suppressed, and a side reaction in the battery can be suppressed, and therefore such contents are preferable.

The fibrous carbon used in the present invention is particularly excellent in dispersibility in the electrode sheet. Although not clear, the reason is considered to be, for example, that the fibrous carbon has the above-described structure, that natural graphite, artificial graphite manufactured by heat-treating petroleum-based or coal-based coke, non-graphitizable carbon, graphitizable carbon, or the like is used as a raw material, and that the fibrous carbon is manufactured through a resin composite fiber in the manufacturing process. It is considered that because excellent in dispersibility in the electrode sheet, the fibrous carbon can form a conductive path over a long distance, and can exhibit excellent battery performance at a small content.

The fibrous carbon used in the present invention may have a porous or hollow structure, and in the process of manufacturing the fibrous carbon, the fibrous carbon preferably passes through a resin composite fiber obtained by melt blend spinning. Therefore, the fibrous carbon of the present invention is preferably substantially solid, and preferably has a basically smooth surface and a linear structure having no branch as described above.

The fibrous carbon used in the present invention may be modified by chemically or physically modifying its surface. The modulator and the form of modification are not particularly limited, and suitable ones are appropriately selected according to the purpose of modification.

Hereinafter, modification of the fibrous carbon will be described.

Modifying the surface of the fibrous carbon with a thermoplastic resin can impart adhesiveness to the fibrous carbon. The method of modification is not particularly limited, and examples the method include a method in which a particulate thermoplastic resin is attached and/or adhered to the surface of the fibrous carbon, a method in which the fibrous carbon and a particulate thermoplastic resin is bonded so that the fibrous carbon penetrates the thermoplastic resin, and a method in which a part of the surface of the fibrous carbon is covered with a thermoplastic resin. In particular, it is preferable that at least a part of a thermoplastic resin be attached in a particulate form. Here, the term "particulate form" means a form of a particle having an aspect ratio of 5 or less, preferably 2 or less, and more preferably 1.5 or less. Specific examples of the method of modification include a method in which the fibrous carbon dispersed in a solution of a thermoplastic resin is spray-dried, a method in which a monomer solution and the fibrous carbon are mixed to polymerize the monomer, and a method in which a thermoplastic resin is precipitated in a solvent in which the fibrous carbon is dispersed.

The thermoplastic resin used for the modification is not particularly limited, and it is preferable to use one or more selected from the group consisting of polyvinyl alcohol, polyacrylic acid, carboxymethylcellulose, polytetrafluoroethylene (PTFE), polyvinylidene fluoride (PVDF), a vinylidene fluoride-hexafluoropropylene copolymer (P-(VDF-HFP)), a tetrafluoroethylene-hexafluoropropylene copolymer (FEP), styrene butadiene rubber (SBR), a fluoroolefin copolymer, polyimides, polyamideimide, aramids, a phenol resin, and the like, and a thermoplastic resin containing a fluorine atom is particularly preferable such as polyvinylidene fluoride (PVDF) or a vinylidene fluoride-hexafluoropropylene copolymer (P-(VDF-HFP)).

The thermoplastic resin preferably has a melting point of 50 to 250°C. The lower limit of the melting point of the thermoplastic resin is more preferably 60°C or more, more preferably 70°C or more, more preferably 80°C or more, more preferably 90°C or more, and more preferably 100°C or more. The upper limit of the melting point of the thermoplastic resin is more preferably 220°C or less, more preferably 200°C or less, more preferably 180°C or less, more preferably 160°C or less, and more preferably 150°C or less.

If the melting point is less than 50°C, particles of the thermoplastic resin are likely to aggregate in the process of dispersion in the electrode sheet. Furthermore, the heat resistance of the battery deteriorates. If the melting point is more than 250°C, the active material and the solid electrolyte may deteriorate.

The glass transition point of the thermoplastic resin is not particularly limited, and is preferably 250°C or less. The upper limit of the glass transition point is preferably 200°C or less, more preferably 150°C or less, more preferably 120°C or less, more preferably 100°C or less, more preferably 80°C or less, more preferably 50°C or less, more preferably 40°C or less, more preferably 30°C or less, more preferably 20°C or less, more preferably 10°C or less, and more preferably 0°C or less.

The content of the fibrous carbon in the electrode sheet of the present invention is 0.1 mass% or more and 10 mass% or less. The lower limit of the content of the fibrous carbon is preferably 0.5 mass% or more, more preferably 1.0 mass% or more, still more preferably 1.2 mass% or more, still even more preferably 1.5 mass% or more, and particularly preferably 1.8 mass% or more. The upper limit of the content of the fibrous carbon is more preferably 6.0 mass% or less, still more preferably 5.0 mass% or less, and particularly preferably 3.0 mass% or less.

The carbon fiber used in the present invention can be manufactured, for example, with the method described in WO 2009/125857. An example will be described below.

First, a mesophase pitch composition is prepared in which mesophase pitch is dispersed in a thermoplastic polymer. Next, the mesophase pitch composition is molded into a thread shape or a film shape in a molten state. Spinning the composition is particularly preferable. Through spinning, the mesophase pitch dispersed in the thermoplastic polymer is extended inside the thermoplastic polymer, and the mesophase pitch composition is fiberized to obtain a resin composite fiber. The resin composite fiber has a sea-island structure including the thermoplastic polymer as a sea component and the mesophase pitch as an island component.

Next, a gas containing oxygen is brought into contact with the obtained resin composite fiber to stabilize the mesophase pitch, and thus a resin composite stabilized fiber is obtained. The resin composite stabilized fiber has a sea-island structure including the thermoplastic polymer as a sea component and the stabilized mesophase pitch as an island component.

Subsequently, the thermoplastic polymer as the sea component of the resin composite stabilized fiber is removed and separated to obtain a carbon fiber precursor.

Then, the carbon fiber precursor is heated at a high temperature to obtain fibrous carbon (a carbon fiber).

(1-4) Fluorine-Based Polymer

As the fluorine-based polymer used in the electrode sheet of the present invention, any fluorine-based polymer having sufficient electrochemical stability can be used. The fluorine-based resin used in the present invention preferably acts as a binder at the time of forming the electrode sheet and preferably forms a fibril easily by a shear force at the time of forming the sheet. For example, a needle-like fiber (fibril) of a polytetrafluoroethylene resin is obtained by applying a shear stress to a granular polytetrafluoroethylene resin. Conventionally, a polytetrafluoroethylene resin has been formed into a needle-like fiber by applying a shear stress to the polytetrafluoroethylene resin, and the formation into a needle-like fiber is also called fibrillation.

In the electrode sheet of the present invention, for example, in the case of forming the sheet by roll press molding, the shear force can be adjusted by adjusting the pressing pressure and the speed difference between the rolls. Examples of such a fluororesin include polytetrafluoroethylene (PTFE), polychlorotrifluoroethylene, polyvinylidene fluoride, an ethylene-tetrafluoroethylene copolymer, a vinylidene fluoride-hexafluoropropylene copolymer (P-(VDF-HFP)), and a tetrafluoroethylene-hexafluoropropylene copolymer (FEP). These fluororesins may be used in combination of two or more kinds thereof. Among them, PTFE is particularly preferable in that it is easily fibrillated.

The content of the fluorine-based polymer in the electrode sheet of the present invention is preferably 0.5 to 25 mass%. The content of the fluorine-based polymer is preferably 0.8 mass% or more, and a content of 1.0 mass% or more, 1.5 mass% or more, 2.0 mass% or more, and 3.0 mass% or more become more preferable in this order. The content of the fluorine-based polymer is preferably 15 mass% or less, and a content of 10 mass% or less, 8 mass% or less, 6 mass% or less, and 5 mass% or less become more preferable in this order. If the content is less than 0.5 mass%, the shape of the electrode sheet is difficult to maintain. If the content is more than 25 mass%, the amount of the active material in the electrode becomes small, and the energy density of the obtained battery tends to be decreased.

The fluorine-based polymer preferably has an average particle size of 50 to 1000 nm, more preferably 80 to 500 nm, and particularly preferably 100 to 400 nm. The average particle size is particularly preferably in the range of 0.1 to 10 times, and more preferably in the range of 0.5 to 5 times the average fiber diameter of the fibrous carbon.

The fluorine-based polymer used in the electrode sheet of the present invention is not particularly limited, and in the electrode sheet, at least a part of the fluorine-based polymer is preferably fibrillated. The fluorine-based polymer forms a network structure with the fibril portion, and the active material and the conductive aid are held in the network structure. Thus, the fluorine-based polymer contributes to sheet formation and can form an electrode sheet having a high tensile breaking strength. Furthermore, as one embodiment of the present invention, it is presumed that the fibrous carbon forms a conductive path in the thickness direction of the electrode sheet while at least a part of the fibrous carbon is in contact with a fibril and incorporated into the network structure or entangled with the fibril. Therefore, it is considered that not only high tensile breaking strength but also excellent electrical conductivity in the thickness direction is exhibited.

(1-5) Carbon-Based Conductive Aid Other Than Fibrous Carbon

The electrode sheet of the present invention may include a carbon-based conductive aid in addition to the fibrous carbon.

Examples of the carbon-based conductive aid other than the fibrous carbon include carbon black, acetylene black, flake carbon, graphene, graphite, and carbon nanotubes (CNT). These carbon-based conductive auxiliaries may be used singly or in combination of two or more kinds thereof.

The shapes of these carbon-based conductive auxiliaries are not particularly limited, and the carbon-based conductive auxiliaries are preferably spherical particles such as carbon black and acetylene black. The carbon-based conductive aid preferably has an average particle size (primary particle size) of 10 to 200 nm, and more preferably 20 to 100 nm. These carbon-based conductive auxiliaries have an aspect ratio of 10 or less, preferably 1 to 5, and more preferably 1 to 3.

The content of the carbon-based conductive aid other than the fibrous carbon in the electrode sheet of the present invention is preferably 0.1 to 4 mass%, more preferably 0.5 to 3 mass%, and still more preferably 1 to 2 mass% with respect to the electrode sheet.

In a case where the conductive aid contains the fibrous carbon and a carbon-based conductive aid other than the fibrous carbon, the mass ratio of the fibrous carbon in the conductive aid is preferably 20 mass% or more and 99 mass% or less, and the mass ratio of the carbon-based conductive aid other than the fibrous carbon is preferably 1 mass% or more and 80 mass% or less, from the viewpoint of achieving both electron conductivity and ion conductivity. The mass ratio of the fibrous carbon is more preferably 40 mass% or more and 99 mass% or less, and the mass ratio of the carbon-based conductive aid other than the fibrous carbon is more preferably 1 mass% or more and 60 mass% or less. The mass ratio of the fibrous carbon is preferably 50 mass% or more, more preferably 60 mass% or more, more preferably 70 mass% or more, more preferably 80 mass% or more, and particularly preferably 85 mass% or more. The mass ratio of the carbon-based conductive aid other than the fibrous carbon is preferably 50 mass% or less, more preferably 40 mass% or less, more preferably 30 mass% or less, more preferably 20 mass% or less, and particularly preferably 15 mass% or less. It is considered that a small amount of the carbon-based conductive aid other than the fibrous carbon also acts as a cushion that buffers a volume change of the active material due to repetition of a charge-discharge cycle.

(1-6) Others

In the case of using the electrode sheet of the present invention in an all solid lithium ion secondary battery, a solid electrolyte may be contained. As the solid electrolyte, a conventionally known material can be selected and used. Examples of the solid electrolyte include sulfide-based solid electrolytes, oxide-based solid electrolytes, hydride-based solid electrolytes, and polymer electrolytes. In the present invention, a sulfide-based solid electrolyte is preferably used because of its high lithium ion conductivity.

Specific examples of the sulfide-based solid electrolyte include sulfide-based solid electrolytes including Li, A, and S (Li-A-S). A in the sulfide-based solid electrolyte Li-A-S is at least one selected from the group consisting of P, Ge, B, Si, Sb, and I. Specific examples of such a sulfide-based solid electrolyte Li-A-S include $Li_7P_3S_{11}$, $70Li_2S-30P_2S_5$, $LiGe_{0.25}P_{0.75}S_4$, $75Li_2S-25P_2S_5$, $80Li_2S-20P_2S_5$, $Li_{10}GeP_2Si_2$, $Li_{9.54}Si_{1.74}P_{1.44}S_{11.7}Cl_{0.3}$, $Li_2S-SiS_2$, and $Li_6PS_5Cl$, and $Li_7P_3S_{11}$ is particularly preferable because of its high ionic conductivity.

Specific examples of the hydride-based solid electrolytes include complex hydrides of lithium borohydride.

Examples of the complex hydrides include a $LiBH_4$-LiI-based complex hydride, a $LiBH_4$-$LiNH_2$-based complex hydride, $LiBH_4$-$P_2S_5$, and $LiBH_4$-$P_2I_4$.

The solid electrolytes may be used singly, or in combination of two or more kinds thereof as necessary.

(2) Method for Manufacturing Electrode Sheet

The electrode sheet of the present invention can be manufactured, for example, by mixing the active material, the carbon-based conductive aid, and the fluorine-based polymer in a powder state to prepare a powder mixture, and pressure-molding the powder mixture into a film shape with a rolling apparatus having a first roll and a second roll. When used in a fibrillated state, the fluorine-based polymer tends to maintain a sheet shape and forms a self-supporting, that is, self-standing film. The fluorine-based polymer may be fibrillated in advance and then used, may be fibrillated at the time of mixing the powder mixture, or may be fibrillated at the time of pressure-molding into a film shape. The fluorine-based polymer is preferably fibrillated at the time of mixing the powder mixture, or fibrillated at the time of pressure-molding into a film shape, from the viewpoint that entanglement of fibril portions generated from the fluorine-based polymer particles enhances the strength of the electrode sheet. At the time of mixing the powder, a volatile solvent such as an alcohol may be added.

Examples of the method of fibrillating the fluorine-based polymer include a method in which shear is applied to the fluorine-based polymer particles at the time of powder mixing, and a method in which shear is applied to the fluorine-based polymer particles by causing a speed difference between the first roll and the second roll at the time of pressure-molding.

The fibril portions generated from the fluorine-based polymer particles preferably have a fiber diameter of 200 nm or less, more preferably 100 nm or less, still more preferably 80 nm or less, and particularly preferably 60 nm or less. The fiber diameter is preferably 1/2 or less, and more preferably 1/3 or less of the particle size of the fluorine-based polymer. Furthermore, the fiber diameter is preferably 1/2 or less, and more preferably 1/3 or less of the fiber diameter of the fibrous carbon to be blended together.

The fibril portions generated from the fluorine-based polymer particles preferably have a fiber diameter of 1 um or more, and more preferably 2 um or more. Furthermore, the fiber diameter is preferably 1/10 or more, and more preferably 1/3 or more of the average fiber length of the fibrous carbon to be blended together.

The manufacturing process of the electrode sheet for lithium ion secondary batteries of the present invention includes no step of applying a slurry, and therefore it is expected that the fibrous carbon used as a conductive aid is less likely to be oriented in one direction, the conductivity in the thickness direction is excellent, and anisotropy in the mechanical strength is less likely to occur.

Furthermore, the active material and the conductive aid easily come into direct contact with each other because no binder dissolved in the solvent is used. The active material and the conductive aid are supported by the fiber of the fluorine-based polymer functioning as a binding material, and therefore high ion conductivity and high electron conductivity can be maintained even if the volume of the active material changes due to charge and discharge. Therefore, it is expected that a lithium ion secondary battery can be provided that achieves reduction in battery electrode resistance and has an excellent cycle characteristic.

**Examples**

Hereinafter, the present invention will be described more specifically with reference to Examples, but the present invention is not limited to these Examples. Various measurement and analyses in Examples were performed in accordance with the following methods.

(Confirmation of Shape of Fibrous Carbon)

The fiber length of the fibrous carbon was determined by measuring a dilute dispersion in which the fibrous carbon (sample) was dispersed in 1-methyl-2-pyrrolidone using an image analysis particle size distribution meter (model IF-200 nano, manufactured by JASCO International Co., Ltd.). The average fiber length of the fibrous carbon is a value of the number average fiber length.

For determination of the fiber diameter of the fibrous carbon, the fibrous carbon was observed and photographed using a scanning electron microscope (S-2400 manufactured by Hitachi, Ltd.). From the obtained electron micrograph, 300 spots were randomly selected, the fiber diameter was measured in each spot, and the average of all the measurement results (n = 300) was determined as the average fiber diameter.

Furthermore, the average aspect ratio was calculated from the average fiber length and the average fiber diameter.

(X-Ray Diffraction Measurement of Carbon Fiber)

In the X-ray diffraction measurement, the lattice spacing (d002) and the crystallite size (Lc002) were measured in accordance with JIS R 7651 using RINT-2100 manufactured by Rigaku Corporation.

(Method of Measuring Powder Volume Resistivity)

The powder volume resistivity was measured using a powder resistivity system (MCP-PD51) manufactured by Mitsubishi Chemical Analytech under a load of 0.02 to 2.50 kN with a four-probe type electrode unit. From the relationship diagram of the volume resistivity with the change in the packing density, the value of the volume resistivity at a packing density of 0.8 g/cm$^3$ was determined as the powder volume resistivity of the sample.

(Measurement of Particle Size of Fluorine-Based Polymer)

For determination of the particle size of the fluorine-based polymer, the fluorine-based polymer was observed and photographed using a scanning electron microscope (S-2400 manufactured by Hitachi, Ltd.). From the obtained electron micrograph, 300 spots were randomly selected, the particle size was measured in each spot, and the average of all the measurement results (n = 300) was determined as the average particle size.

(Tensile Breaking Strength and Thickness of Electrode Sheet)

The electrode sheet was cut out to have a width of 1 cm, and the tensile breaking strength was measured using a digital force gauge (FGP-10 manufactured by SHIMPO).

(Electrical Conductivity)

The electrode resistance of the produced electrode in the thickness direction was measured using a potentiostat/galvanostat (HA-151B manufactured by HOKUTO DENKO CORPORATION). Table 1 shows the measurement results and the electrical conductivities calculated from the resistance values.

(Method of Manufacturing Mesophase Pitch)

Coal tar pitch having a softening point of 80°C from which a quinoline insoluble component was removed was hydrogenated at a pressure of 13 MPa and a temperature of 340°C in the presence of a Ni-Mo based catalyst to obtain hydrogenated coal tar pitch. The hydrogenated coal tar pitch was heat-treated at 480°C under normal pressure, and then depressurized to remove a low boiling point component, and thus mesophase pitch was obtained. The mesophase pitch was filtered at a temperature of 340°C using a filter to remove foreign matters in the pitch, and thus purified mesophase pitch was obtained.

(Method of manufacturing Fibrous Carbon (CNF))

Using a co-rotation twin screw extruder ("TEM-26SS" manufactured by Toshiba Machine Co., Ltd., barrel temperature: 300°C, under nitrogen stream), 60 parts by mass of linear low density polyethylene (EXCEED (registered trademark) 1018HA, manufactured by Exxon Mobil Corporation, MFR = 1 g/10 min) as a thermoplastic resin and 40 parts by mass of the mesophase pitch (mesophase rate: 90.9%, softening point: 303.5°C) obtained by the above-described method of manufacturing mesophase pitch were melt-kneaded to prepare a mesophase pitch composition.
Next, this mesophase pitch composition was melt-spun at a spinneret temperature of 360°C to mold a long fiber having a fiber diameter of 90 um.
The mesophase pitch-containing fiber bundle obtained in the above-described operation was held at 215°C for 3 hours in air to stabilize the mesophase pitch, and thus a stabilized mesophase pitch-containing fiber bundle was obtained. In a vacuum gas replacement furnace, nitrogen replacement was performed, and then the stabilized mesophase pitch-containing fiber bundle was depressurized to 1 kPa and held at 500°C for 1 hour under the depressurized state to remove the thermoplastic resin and obtain a stabilized fiber.
Then, the stabilized fiber was held at 1000°C for 30 minutes under a nitrogen atmosphere and thus carbonized, and further heated to 1500°C and held for 30 minutes under an argon atmosphere and thus graphitized.
Then, the graphitized carbon fiber assembly was pulverized to obtain a powdery carbon fiber assembly. The carbon fiber had a linear structure having no branch.
In a SEM photograph of the obtained carbon fiber, no branch was observed (the branching degree was 0.00).

The carbon fiber had a crystallite spacing d002 of 0.3441 nm, a crystallite size Lc002 of 5.4 nm, an average fiber diameter of 270 nm, an average fiber length of 15 um, an average aspect ratio of 56, a powder volume resistivity at 0.8 g/cm$^3$ of 0.0277 $\Omega \cdot$cm, and a specific surface area of 10 m$^2$/g. The metal content was less than 20 ppm.

(Surface Modification of Fibrous Carbon (i))

In acetone, 1 part by mass of P-(VDF-HFP) (Kynar 2500-20 manufactured by ARKEMA K.K.) was dissolved and 3 parts by mass of the fibrous carbon was dispersed to prepare a dispersion. The dispersion was spray-dried using a spray dryer (SB39, manufactured by PRECI Co., Ltd.) to modify the surface of the fibrous carbon with P-(VDF-HFP) (hereinafter, the resulting product is abbreviated as resin-attached fiber (i)).

(Surface Modification of Fibrous Carbon (ii))

The surface of the fibrous carbon was modified with a VDF-HFP copolymer in the same manner as in Surface Modification of Fibrous Carbon (i) except that the amount of the fibrous carbon to be dispersed was changed to 9 parts by mass (hereinafter, the resulting product is abbreviated as resin-attached fiber (ii)).

(Example 1)

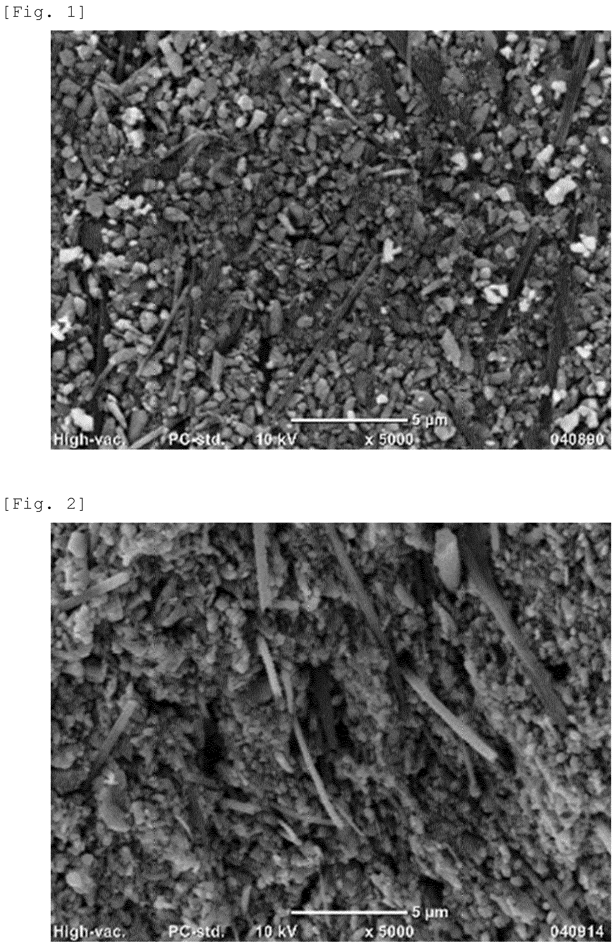

Ninety parts by mass of LiFePO$_4$ as an active material, 5 parts by mass of polytetrafluoroethylene (PTFE) having an average particle size of 200 nm as fluorine-based polymer particles, and 5 parts by mass of the fibrous carbon manufactured above as a carbon-based conductive aid were mixed, and shear was further applied using a mortar. This mixture was repeatedly pressed using a roll press to mold into a sheet shape. The obtained electrode sheet had a thickness of 188 um and a tensile breaking strength of 0.32 N/mm$^2$. The electrode sheet had an electrical conductivity of 2.7 × 10$^{-3}$ S/cm in the thickness direction, and a porosity of 39 vol%. The PTFE was at least partially fibrillated and had a fiber diameter of approximately 50 nm. Fig. 1 shows an SEM photograph of a surface of the electrode sheet, and Fig. 2 shows an SEM photograph of a cross section of the electrode sheet. From these SEM photographs, it can be confirmed that fibrillated PTFE is present in addition to the fibrous carbon.

(Example 2)

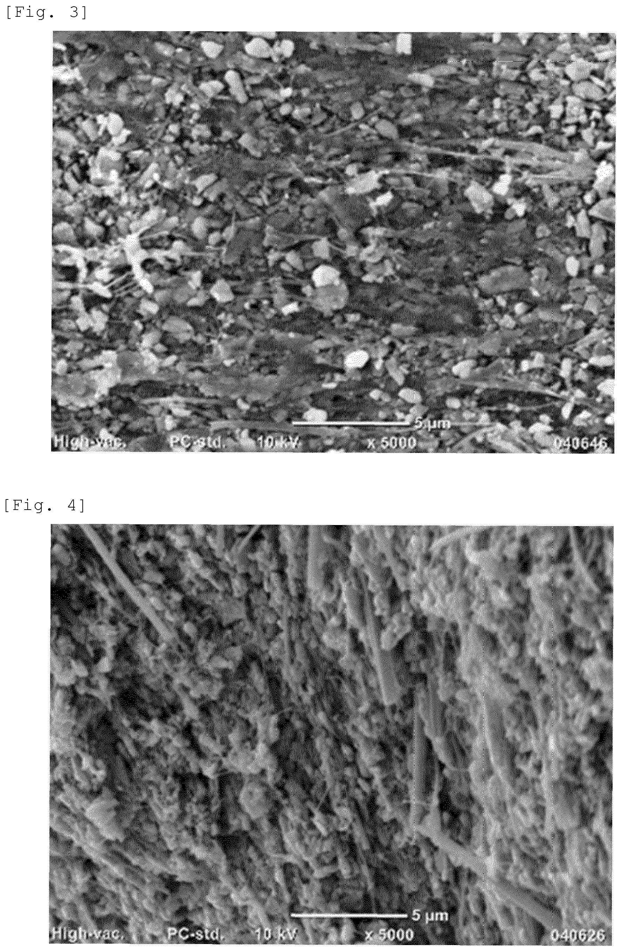

An electrode sheet was obtained in the same manner as in Example 1 except that 87 parts by mass of LiFePO$_4$ as the active material, 10 parts by mass of polytetrafluoroethylene (PTFE) having an average particle size of 200 nm as the fluorine-based polymer particles, and 3 parts by mass of the fibrous carbon manufactured above as the carbon-based conductive aid were used. Table 1 shows the physical properties. Fig. 3 shows an SEM photograph of a surface of the electrode sheet, and Fig. 4 shows an SEM photograph of a cross section of the electrode sheet. From these SEM photographs, it can also be confirmed that fibrillated PTFE is present in a larger amount than in Example 1 and that the fibrillated PTFE supports the active material particles and the fibrous carbon and is entangled with the fibrous carbon.

(Comparative Example 1)

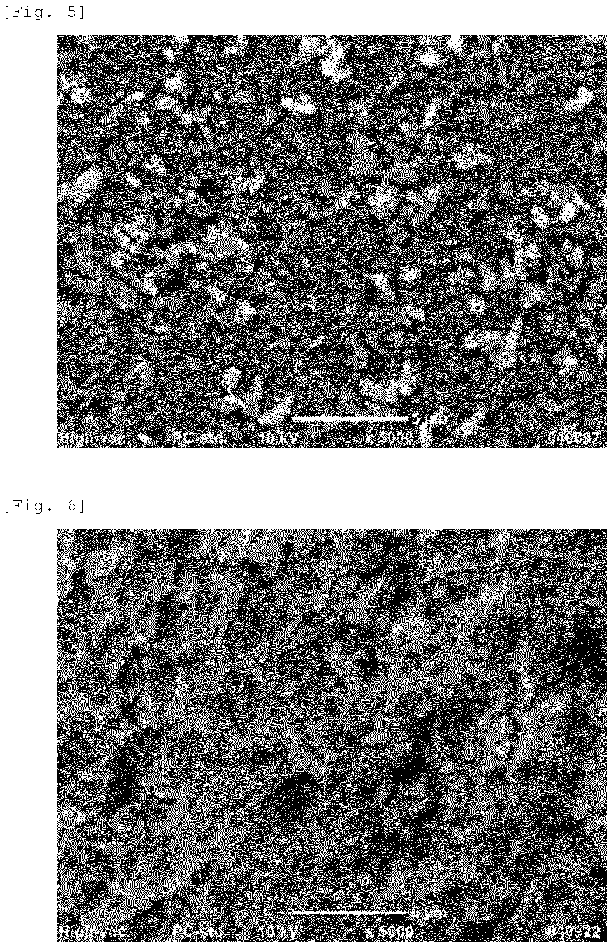

An electrode sheet was obtained in the same manner as in Example 1 except that the fibrous carbon was changed to acetylene black (hereinafter, sometimes abbreviated as "AB". "DENKA BLACK" (registered trademark) manufactured by Denka Company Limited, 75% pressed product, average particle size: 0.036 um, specific surface area: 65 m$^2$/g). Table 1 shows the physical properties. Fig. 5 shows an SEM photograph of a surface of the electrode sheet, and Fig. 6 shows an SEM photograph of a cross section of the electrode sheet. From these SEM photographs, it can be confirmed that fibrillated PTFE supports a particulate matter.

(Comparative Example 2)

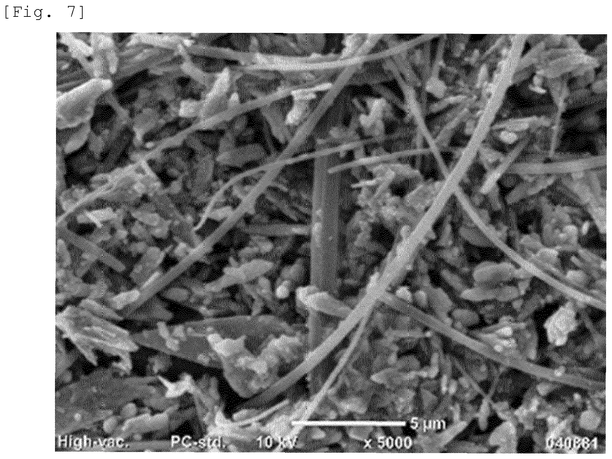

Ninety parts by mass of LiFePO$_4$ as an active material, 5 parts by mass of polytetrafluoroethylene (PTFE) having an average particle size of 200 nm as fluorine-based polymer particles, 5 parts by mass of the fibrous carbon manufactured above as a carbon-based conductive aid, and 230 parts by mass of water as a solvent were mixed to produce a slurry. The slurry was applied onto a current collector and dried to produce an electrode sheet. Fig. 7 shows an SEM photograph of a surface of the electrode sheet. In this SEM photograph, a fibrous matter other than the fibrous carbon was not observed. That is, it can be confirmed that fibrillated PTFE is not present. The obtained electrode sheet was incapable of maintain the sheet shape, and measurement of the physical properties was impossible.

(Example 3)

An electrode sheet was obtained in the same manner as in Example 1 except that the thickness was changed to 404 um. Table 1 shows the physical properties. Even when the thickness was increased, the electrical conductivity was not decreased.

(Example 4)

An electrode sheet was obtained in the same manner as in Example 1 except that 4 parts by mass of the fibrous carbon manufactured above and 1 part by mass of AB were used as the carbon-based conductive aid. Table 1 shows the physical properties. The use of another carbon-based conductive aid in combination further improved the electrical conductivity.

(Example 5)

An electrode sheet was obtained in the same manner as in Example 1 except that 92 parts by mass of $LiFePO_4$ as the active material and 3 parts by mass of the fibrous carbon manufactured above as the carbon-based conductive aid were used. Table 1 shows the physical properties.

(Example 6)

An electrode sheet was obtained in the same manner as in Example 1 except that 93 parts by mass of $LiFePO_4$ as the active material and 2 parts by mass of the fibrous carbon manufactured above as the carbon-based conductive aid were used. Table 1 shows the physical properties.

(Example 7)

An electrode sheet was obtained in the same manner as in Example 1 except that the resin-attached fiber (i) manufactured in Surface Modification of Fibrous Carbon (i) above was used as the carbon-based conductive aid. Table 1 shows the physical properties. The breaking strength was increased because the resin-attached fiber (i) was used.

(Example 8)

An electrode sheet was obtained in the same manner as in Example 1 except that the resin-attached fiber (ii) manufactured in Surface Modification of Fibrous Carbon (ii) above was used as the carbon-based conductive aid. Table 1 shows the physical properties. The breaking strength was increased because the resin-attached fiber (ii) was used.

[Table 1]

(Table 1)

| | Constituent material | | | Composition of electrode | | | Physical properties of electrode | | | | | | | |
|---|---|---|---|---|---|---|---|---|---|---|---|---|---|---|
| | Active material | Binder | Conductive aid | Xa: Active material (parts by mass) | Xb: Binder (parts by mass) | Xc: Conductive aid (parts by mass) | Thickness ($\mu$m) | Breaking strength $\times$ thickness (N/mm) | Breaking strength (N/mm$^2$) | $\sigma$: Electrical conductivity (S/cm) | $\sigma$/Xc (S/cm) | Apparent density (g/cc) | True density (g/cc) | Porosity (vol%) |
| Example 1 | $LiFePO_4$ | PTFE | CNF | 90 | 5 | 5 | 188 | 0.06 | 0.32 | $2.7\times10^{-3}$ | $5.5\times10^{-4}$ | 2.11 | 3.46 | 39 |
| Example 2 | $LiFePO_4$ | PTFE | CNF | 87 | 10 | 3 | 395 | 0.272 | 0.69 | $1.8\times10^{-3}$ | $6.0\times10^{-4}$ | 1.88 | 3.418 | 45 |
| Comp. Example 1 | $LiFePO_4$ | PTFE | AB | 90 | 5 | 5 | 195 | 0.031 | 0.16 | $6.0\times10^{-4}$ | $1.2\times10^{-4}$ | 2.10 | 3.46 | 39 |
| Comp. Example 2 | $LiFePO_4$ | PTFE (particulate) | CNF | 90 | 5 | 5 | | | | | | | | |
| Example 3 | $LiFePO_4$ | PTFE | CNF | 90 | 5 | 5 | 404 | 0.170 | 0.42 | $2.6\times10^{-2}$ | $5.2\times10^{-3}$ | 1.85 | 3.46 | 46 |
| Example 4 | $LiFePO_4$ | PTFE | CNF:AB =4:1 | 90 | 5 | 5 | 199 | 0.058 | 0.29 | $1.7\times10^{-2}$ | $3.4\times10^{-3}$ | 1.96 | 3.46 | 43 |
| Example 5 | $LiFePO_4$ | PTFE | CNF | 92 | 5 | 3 | 234 | 0.067 | 0.28 | $8.7\times10^{-3}$ | $2.9\times10^{-3}$ | 1.99 | 3.49 | 43 |
| Example 6 | $LiFePO_4$ | PTFE | CNF | 93 | 5 | 2 | 289 | 0.077 | 0.26 | $3.6\times10^{-3}$ | $1.8\times10^{-3}$ | 2.01 | 3.50 | 43 |
| Example 7 | $LiFePO_4$ | PTFE | Resin-attached fiber (i) | 90 | 6.25 | 3.75 | 205 | 0.156 | 0.76 | $1.9\times10^{-3}$ | $3.8\times10^{-4}$ | 2.18 | 3.46 | 37 |
| Example 8 | $LiFePO_4$ | PTFE | Resin-attached fiber (ii) | 90 | 5.5 | 4.5 | 216 | 0.109 | 0.51 | $4.7\times10^{-3}$ | $9.5\times10^{-4}$ | 2.20 | 3.46 | 36 |

**Claims**

1. An electrode sheet for lithium ion secondary batteries, the electrode sheet comprising at least an active material for lithium ion batteries, fibrous carbon, and a fluorine-based polymer,

    the electrode sheet for lithium ion secondary batteries having a thickness of 50 to 2000 (um) and a tensile breaking strength of 0.20 (N/mm$^2$) or more,
    the fibrous carbon having an average fiber diameter of 100 to 900 (nm), wherein
    a content of the fibrous carbon in the electrode sheet for lithium ion secondary batteries is 0.1 to 10 (mass%).

2. The electrode sheet for lithium ion secondary batteries according to claim 1, further comprising a carbon-based conductive aid other than the fibrous carbon.

3. The electrode sheet for lithium ion secondary batteries according to claim 1, wherein the fibrous carbon has an average fiber length of 10 to 50 (um).

4. The electrode sheet for lithium ion secondary batteries according to claim 1, wherein the fibrous carbon packed at a packing density of 0.8 (g/cm$^3$) has a powder volume resistivity of 4.00 $\times$ 10$^{-2}$ ($\Omega$·cm) or less.

5. The electrode sheet for lithium ion secondary batteries according to claim 1, wherein the fluorine-based polymer is polytetrafluoroethylene.

6. The electrode sheet for lithium ion secondary batteries according to claim 1, having a porosity of 5 to 60 (vol%).

7. The electrode sheet for lithium ion secondary batteries according to claim 1, having a product of the tensile breaking strength (N/mm$^2$) and the thickness (mm) of 0.04 (N/mm) or more.

8. The electrode sheet for lithium ion secondary batteries according to claim 1, having an electrical conductivity of 8.0 $\times$ 10$^{-4}$ (S/cm) or more in a thickness direction.

[Fig. 1]

[Fig. 2]

[Fig. 3]

[Fig. 4]

[Fig. 5]

[Fig. 6]

[Fig. 7]

## INTERNATIONAL SEARCH REPORT

| International application No. |
|---|
| **PCT/JP2022/021946** |

### A. CLASSIFICATION OF SUBJECT MATTER

*H01M 4/13*(2010.01)i; *H01M 4/62*(2006.01)i
FI:   H01M4/13; H01M4/62 Z

According to International Patent Classification (IPC) or to both national classification and IPC

### B. FIELDS SEARCHED

Minimum documentation searched (classification system followed by classification symbols)
    H01M4/13; H01M4/62

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2018-49837 A (TEIJIN LTD) 29 March 2018 (2018-03-29) paragraphs [0021], [0025], [0034]-[0036], [0038], [0042], [0053], [0059], [0085], [0088] | 1-6, 8 |
| A | | 7 |
| Y | JP 2019-512872 A (MAXWELL TECHNOLOGIES, INC.) 16 May 2019 (2019-05-16) paragraphs [0014], [0023] | 1-6, 8 |
| A | | 7 |
| Y | JP 2017-66546 A (TEIJIN LTD) 06 April 2017 (2017-04-06) paragraph [0031] | 4 |
| Y | WO 2020/045243 A1 (TEIJIN LTD) 05 March 2020 (2020-03-05) paragraphs [0020], [0029], [0077], [0079], [0090], [0094], [0106], [0107] | 1-6, 8 |
| A | | 7 |

☐ Further documents are listed in the continuation of Box C.          ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **11 July 2022** | **26 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2022/021946**

| Patent document cited in search report | | | Publication date (day/month/year) | Patent family member(s) | Publication date (day/month/year) |
|---|---|---|---|---|---|
| JP | 2018-49837 | A | 29 March 2018 | US 2017/009822 A1<br>paragraphs [0068], [0074], [0087]-[0089], [0093], [0099], [0117], [0128], [0176], [0182]<br>WO 2015/147234 A1<br>EP 3125337 A1<br>KR 10-2016-0138001 A<br>CN 106463695 A | |
| JP | 2019-512872 | A | 16 May 2019 | US 2017/0256367 A1<br>[0024],[0033]<br>US 2021/0193398 A1<br>WO 2017/151518 A1<br>KR 10-2018-0119158 A<br>CN 109074961 A | |
| JP | 2017-66546 | A | 06 April 2017 | (Family: none) | |
| WO | 2020/045243 | A1 | 05 March 2020 | US 2021/0324545 A1<br>paragraphs [0028], [0039], [0040], [0108], [0110], [0124], [0130], [0146], [0148]<br>EP 3845690 A1<br>CN 112585307 A<br>KR 10-2021-0045468 A | |

Form PCT/ISA/210 (patent family annex) (January 2015)

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014115852 A
- JP 2020522090 A
- JP 2021504877 A
- WO 2009125857 A